# EUROPÄISCHE PATENTSCHRIFT

(11) **EP 3 316 737 B1**
(45) Veröffentlichungstag und Bekanntmachung des Hinweises auf die Patenterteilung: **10.04.2019**
(21) Anmeldenummer: 16748259.5
(22) Anmeldetag: 02.07.2016
(51) Int. Cl.: A47C 31/12, A47C 31/00, A47C 19/04, A47C 23/06, G06Q 10/02, G06Q 50/12

(54) **ANORDNUNGEN MIT EINER RUHEEINHEIT BZW. MIT RUHEEINHEITEN FÜR ZUMINDEST EINE PERSON MIT EINER EINSTELLBAREN LIEGE- UND SITZFLÄCHE, SOWIE EIN VERFAHREN ZUR STEUERUNG DER RUHEEINHEITEN IN EINER SOLCHEN ANORDNUNG**
ARRANGEMENT OF REST UNITS FOR A HUMAN BODY WITH ADJUSTABLE LYING AND SITTING AREA AS WELL AS CONTROL METHOD THEREOF
ARRANGEMENT DES UNITES DE REPOS POUR UN INDIVIDU AVEC UNE SURFACE DE REPOS AJUSTABLE ET METHODE DE COMMANDE DES UNITES DE REPOS

(30) Priorität: 03.07.2015 DE 102015110819
(43) Veröffentlichungstag der Anmeldung: 09.05.2018
(73) Patentinhaber: RUMMEL Matratzen GmbH & Co. KG, 91413 Neustadt a.d. Aisch (DE)
(72) Erfinder: NEUDECKER, Klaus, 91074 Herzogenaurach (DE)
(74) Vertreter: Mielke, Klaus
(86) Internationale Anmeldenummer: PCT/DE2016/100297
(87) Internationale Veröffentlichungsnummer: WO 2017/005248

(56) Entgegenhaltungen:
- EP-A1- 3 188 621
- DE-A1-102010 021 362
- US-A1- 2003 149 576
- US-B1- 8 458 042

## Beschreibung

Die Erfindung betrifft eine Anordnung mit einer Ruheeinheit und eine Anordnung mit Ruheeinheiten für zumindest eine Person, sowie eine Beherbergungseinrichtung mit einer solchen Ruheeinheit und ein Verfahren zur Steuerung einer Anordnung von Ruheeinheiten, wobei jede Ruheeinheit eine Liege- und Sitzfläche mit einem einstellbaren Höhen- und/oder Härteverlauf aufweist.

Ruheeinheiten für Personen mit Liegeflächen sind in unterschiedlichsten Formen im täglichen Gebrauch. So ermöglichen es Ruheeinheiten, wie z.B. eine Matratze, Polster, Liege, Couch, Ottomane sowie ein Bett, Boxspringbett, Sofa, Diwan, einer Person zur Entspannung eine annähernd horizontal oder leicht schräg liegende Position einzunehmen. Dabei ist es häufig gewünscht, dass die Liegefläche der Ruheeinheit an individuelle physikalische Körperparameter der darauf ruhenden Person, z.B. deren Gewicht und Größe, angepasst ist.

Hierzu wird von einer Person im privaten Lebensbereich der Liegekomfort in der Regel durch die Auswahl einer Ruheeinheit bestimmt, welche bauartbedingt eine als angenehm empfundene Nachgiebigkeit aufweist. Hierfür werden Matratzen in unterschiedlichen Härten angeboten, welche durch die Auswahl der jeweils eingesetzten Polstermaterialen und der Konstruktion des inneren Aufbaus bereits bei der Fertigung konfektioniert werden kann. Eine solche Individualmatratze ist aber für andere Personen, die abweichende Körperparameter aufweisen, weniger oder gar nicht geeignet.

So ist es zunehmend gewünscht, dass die Liege- und Sitzfläche einer Ruheeinheit von einer beliebigen darauf ruhenden Person an deren physikalische Körperparameter, wie z.B. Gewicht und Größe, individuell angepasst und gegebenenfalls jederzeit nachgestellt werden kann. Hierzu können Ruheeinheiten mit manuell betätigbaren oder motorisch steuerbaren Aktoren ausgestattet sein, die z.B. eine Höhen- und Winkelverstellung der gesamten Liegefläche oder von Teilzonen derselben, z.B. in einem Kopf-, Rücken-, Becken-, Bein- und Fußbereich, ermöglichen. In der Liegefläche kann somit von einer Person ein individuelles, insbesondere vom aktuellen subjektiven Liegeempfinden abhängiges Höhenprofil eingestellt und gegebenenfalls nachjustiert werden. Mit derartigen steuerbare Aktoren ist es auch möglich, die Einsinktiefe einer auf einer Liegefläche ruhenden Person bzw. von Körperpartien derselben einzustellen, d.h. die Härte bzw. Nachgiebigkeit der Liegefläche oder von Teilzonen derselben.

Abhängig von der Bauart der jeweiligen Ruheeinheit ist hierzu eine Vielzahl von Ausführungen bekannt. So können die auf die Liege- und Sitzfläche der Ruheeinheit einwirkenden Aktoren z.B. elektrische Antriebe darstellen, welche Hebelwerke und Schneckenantriebe unterhalb oder in der Liegefläche betätigen. Ein Beispiel hierfür sind Motorrahmen, die als eine einstellbare Unterfederung unter einer aufgelegten Matratze dienen. Die Aktoren können z.B. auch Pumpen darstellen, welche auf sack- oder röhrenförmige Hohlräume in der Liege- und Sitzfläche einer Ruheeinheit einwirken und eine Be- oder Entladung mit Druckluft oder Wasser ermöglichen.

Weiterhin können Aktoren auch Stellkräfte unter Anwendung anderer physikalischer Prinzipien hervorrufen, z.B. mittels Elektrostriktion oder magnetischer Felder. Weiterhin sind auch Seilzugsysteme bekannt, bei denen über Aktoren in oder unterhalb einer Matratze befindliche Flächenbereiche gestrafft oder gelockert werden können. Die hier genannten Vorrichtungen zur aktorgesteuerten Einstellung eines Höhen- und/oder Härteverlaufs in einer Liege- und Sitzfläche sind nur beispielhaft. Abhängig vom konstruktiven Aufbau der jeweiligen Ruheeinheit können alle Vorrichtungen dieser Art bei der vorliegenden Erfindung auch in Kombination Verwendung finden.

Eine verbreitete Ausführung für eine derartige Ruheeinheit ist z.B. ein Bettgestell, worin ein einstellbarer Lattenrost mit einer darauf befindlichen Matratze eingelegt sind. Bei einem solchen Rost können Lattenzonen, z.B. ein Rück-, Becken- und Fußbereich, bzw. auch einzelne Latten höhen- und/oder winkelverstellbar ausgeführt sein. Zudem kann es auch möglich sein, die Nachgiebigkeit einzelner Latten- und Lattengruppen dynamisch einzustellen. Der Höhen- und/oder Härteverlauf in und entlang der Liege- und Sitzfläche der in aller Regel biegeelastischen Matratze kann mit einem solchen, als eine Art einstellbare Unterfederung wirkenden Lattenrost, von einer Person individuell auf körperliche Besonderheiten und aktuelle Bedürfnisse eingestellt werden. Einstellbare Unterfederungen dieser Art können z.B. auch schachbrettartige Muster von einzeln ansteuerbaren Flächenelementen aufweisen.

Weiterhin sind einstellbare Matratzen bekannt, die direkt mit steuerbaren Aktoren ausgestattet sind. Diese können Hohlräume aufweisen, welche zur Beeinflussung des Höhen- und/oder Härteverlaufs in der Liege- und Sitzfläche z.B. mit einstellbarer Druckluft beaufschlagt werden können. Es sind auch Matratzen bekannt, die mit einstellbaren Verzurrelementen ausgestatteten sind, um die Zugspannung in der Liegefläche zonenweise einstellen zu können. Besondere Kombinationen von Bettgestell bzw. Bettkasten mit aufgelegten Liegepolstern, welche mit einer Vielzahl von Ein- und Verstellmöglichkeiten ausgestattet sind bzw. solche aufweisen, werden auch Boxspringbetten genannt.

Die Einstellung eines Höhen- und/oder Härteverlaufs in der Liegefläche einer Ruheeinheit wird von einer darauf ruhenden Person individuell vorgenommen. Die zur Verfügung stehenden steuerbaren Aktoren werden hierzu von der Person so lange betätigt, bis eine aktuell subjektiv zufriedenstellende Einstellung der jeweiligen Ruheeinheit gefunden wurde. Es ist auch bekannt, auf diese Weise manuell und experimentell aufgefundene Einstellungen personenbezogen in einer elektronischen Vorrichtung zu speichern und bei Bedarf wieder zu aktivieren. Ruheeinheiten dieser Art können zwar von jeder Person auf die jeweils gewünschten bzw. benötigten Liegebedingungen individuell parametriert werden. Ein Nachteil besteht jedoch darin, dass eine körperspezifische Einstellung von jeder Person erneut gesucht werden muss und erst danach in einer elektronischen Vorrichtung datentechnisch gesichert werden kann.

Die Druckschrift DE 10 2014 112 548 A1 zeigt ein Arbeitsplatzstuhlsystem. Dieses enthält Sensormittel, um Positionen von Elementen des Arbeitsplatzstuhls sowie die Sitzhaltung eines Benutzers zu bestimmen und ein Positionssignal abzuleiten. Eine Berechnungseinheit erzeugt aus dem Positionssignal ein Rückmeldesignal. Dieses enthält Vorschläge bezüglich möglicher Veränderungen der Elemente des Arbeitsplatzstuhls und der Sitzhaltung des Benutzers. Als Reaktion auf die Anzeige des Rückmeldesignals kann der Benutzer Verstellmittel betätigen, um Elemente des Arbeitsplatzstuhls zu verändern. Er kann auch eine ergonomisch verbesserte Sitzhaltung einnehmen. Die Berechnungseinheit kann das Rückmeldesignal ableiten aus einem Vergleich von Ergonomiedaten mit Referenzdaten, insbesondere von physischen Eigenschaften des Benutzers. Hierzu können Informationen über den Körperbau des Benutzers und eine Bekleidungsgröße dienen. Es wird somit ein Beobachtungs- und Benachrichtigungssystem beschrieben, das einem Benutzer bei der iterativen Auffindung einer optimalen Sitzeinstellung bzw. Sitzposition assistiert.

Im Dokument DE 10 2010 021 362 A1 wird ein Bewegungsmodul für einen Lattenrost zur Einstellung der Taille und des Beckens beschrieben, um eine optimale Lage der Wirbelsäule zu erhalten. Dieses soll es ermöglichen, derartige optimale Einstellungen und auch Nachjustierungen zu realisieren, während der Nutzer auf der Matratze des Lattenrostes liegt. Eine auf diese Weise von einem die Matratze belastenden Nutzer gefundene individuelle Einstellung kann dann in Form von nutzerspezifischen Daten abgespeichert und vom eigenen Bett auf ein weiteres Bett übertragen werden, so dass jederzeit alle Einstellungen wieder zur Verfügung stehen.

Im Dokument US 8,458,042 B1 wird ein Verfahren zur Auswahl einer Matratze beschrieben, welches einem Kunden die Auswahl einer für ihn passenden Matratze und damit eine mögliche Kaufentscheidung erleichtern soll, ohne dass der Kunde vorher selbst auf einem Testbett Platz genommen haben muss. Hierzu werden von einer "Body Matching Application" verschiedene Sätze an Eingabedaten ausgewertet, z.B. ein Satz an Daten, welcher Körpercharakteristika und das Schlafverhalten der Person betrifft, und ein Satz an Daten, der eine Abbildung der Person repräsentiert. Es können weitere Eingabedatensätze hinzugezogen werden, z.B. ein Katalog der Daten erwerbbarer Matratzen bzw. durch ärztliche Untersuchungen gewonnene Daten.

Der Erfindung liegt die Aufgabe zu Grunde eine Anordnung mit einer oder mehreren Ruheeinheiten der oben beschriebenen Art so weiterzubilden, dass eine Vorparametrierung eines personenspezifischen Höhen- und/oder Härteverlaufs in der Liege- und Sitzfläche einer Ruheeinheit einfach möglich ist.

Die Aufgabe wird gelöst mit den im Anspruch 1 und 2 angegebenen Anordnungen von Ruheeinheiten. Die Aufgabe wird weiterhin gelöst mit der Beherbergungseinrichtung von Anspruch 9 sowie dem im Anspruch 10 angegebenen Verfahren zur Steuerung einer Anordnung von Ruheeinheiten. Die Unteransprüche enthalten vorteilhafte weitere Ausgestaltungen der Erfindung.

Die Erfindung bietet den besonderen Vorteil, dass es jeder Person durch Eingabe der Konfektionsgröße der von dieser getragenen Bekleidung möglich ist, die Liege- und Sitzfläche selbstständig so voreinzustellen, dass diese einen an die jeweilige Person angepassten Höhen- und/oder Härteverlauf annimmt. Als ein universeller, präziser und für jede Person auf einfache Weise verfügbarer Eingabewert ist die Konfektionsgröße besonders gut geeignet, um eine individuelle Grundeinstellung des Höhen- und/oder Härteverlaufes der jeweiligen Ruheeinheit vorzunehmen. So müssen z.B. kleine und leichte bzw. große und schwere Personen keine zeitaufwendigen Veränderungen der steuerbaren Aktoren einer Ruheeinheit vornehmen, um deren Sitz- bzw. Liegefläche in einen passenden Zustand zu überführen.

Als Eingabewerte eignen sich besonders die Konfektionsgrößenwerte eines vereinheitlichten, standardisierten Bekleidungsgrößensystems. Dabei werden die einzelnen Größenwerte aus kennzeichnenden Körpermaßen, wie z.B. dem Brust-, Bund- und Gesäßumfang, Körpergröße, Armlänge, Beininnenlänge, Gewicht, Körpermaße, Ober-, Taillen- und Hüftweite usw., von z.B. einer Vielzahl an Probanden abgeleitet. Zudem können dabei die unterschiedlichen Körperparameter von Männern, Frauen und Kindern sowie Personen aus verschiedenen Regionen der Erde berücksichtigt werden. So sind als Bekleidungsgrößensysteme insbesondere internationale Konfektionsgrößen, d.h. Eingabewerte z.B. XS, S, M, L, XL, XXL, und nationale Konfektionsgrößen, z.B. deutsche, französische, italienische, englische und amerikanische Normgrößen, im Gebrauch. Bei der Erfindung sind als Konfektionsgröße des Bekleidungsstücks einer Person auch die Größen von Fußbekleidung, insbesondere von Schuhwerk, als Eingabewert verwendbar. Zudem macht es die Erfindung einer Person möglich, eine beliebig ausgewählte, insbesondere leicht ablesbare Konfektionsgröße zu verwenden. So kann sich die Person ohne weiteres z.B. durch die Größe der jeweils verwendeten Oberbekleidung, z.B. der Hemden bzw. Blusen, der Sportbekleidung oder der Geschäftsbekleidung, z.B. der Anzüge oder Rocke, bei einer erfindungsgemäßen Anordnung quasi authentifizieren.

Die Erfindung macht eine automatische, individualisierte Voreinstellung von Ruheeinheiten für Personen möglich, besonders von Betten mit Matratzen und Lattenrosten sowie von Boxspringbetten, ohne dass die jeweilige Person bereits auf der Ruheeinheit Platz genommen haben muss. Es ist somit eine Planung und Organisation der Vorkonfektionierung eines an eine bestimmte Person angepassten Höhen- und/oder Härteverlaufes in einer Liege- und Sitzfläche bereits lange vor dem Zeitpunkt der eigentlichen Benutzung einer entsprechenden einstellbaren Ruheeinheit durch die Person möglich. Die Erfindung ist besonders geeignet in Beherbergungseinrichtungen mit einer Vielzahl von bevorzugt identischen Ruheeinheiten, z.B. Hotels. Es ist damit möglich, den Nutzungskomfort für Gäste zu verbessern und die Organisation von Betriebsabläufen zu erleichtern, indem die Ruheeinheiten in allen Zimmern für jeden beliebigen Gast jederzeit schnell und wirkungsvoll voreingestellt werden können.

Bei einer vorteilhaften Weiterbildung der Erfindung kann auf einfache und schnelle Weise die Vorparametrierung einer Ruheeinheit, d.h. quasi die Bestellung eines individuellen Liegekomforts, vom Gast selbst durch Verwendung eines persönlichen Mobilgeräts, z.B. eines Mobil- oder Smartphones, das über ein Funknetzwerk an die Steuereinrichtung der Anordnung ankoppelbar ist, vorgenommen werden. Bei Einsatz eines Ganzkörperscanners als ein Eingabemittel, z.B. in einem Empfangsbereich, kann die erfindungsgemäße Vorparametrierung auch von selbst erfolgen. In diesem Fall kann der Eingabewert für eine Konfektionsgröße vollautomatisch bestimmt und an die Steuereinrichtung der erfindungsgemäßen Anordnung datentechnisch übertragen werden.

Das erfindungsgemäße Verfahren zur Steuerung einer Anordnung von Ruheeinheiten erleichtert die oben beschriebene Vorparametrierung von Ruheeinheiten erheblich. So können von einer Person die Vorgabe eines Eingabewertes für die Konfektionsgröße und deren automatische Weiterverarbeitung auch über das Internet vorgenommen werden, insbesondere bei der Durchführung eines Buchungsvorgangs für eine Beherbergung in einem Hotel. Dabei können als Eingabemittel persönliche Bediengeräte zum Einsatz kommen, insbesondere Personal Computer, die über das Internet vorübergehend mit der Steuereinrichtung der Anordnung datentechnisch verbindbar sind. Bei einer solchen Buchung kann als eine einfache Ergänzung der dabei ohnehin vorzunehmenden Vorgaben, insbesondere der Auswahl einer Ruheeinheit einer bestimmten Kategorie z.B. in einem bestimmten Zimmer, auch die Konfektionsgröße zur selbstständigen Voreinstellung eines Höhen- und/oder Härteverlaufs in der gewünschten Liege- und Sitzfläche mit eingegeben werden.

Die Erfindung macht auch eine Vereinfachung der Ausstattung insbesondere in einem Hotel möglich. So können bei einer vorteilhaften Ausführung der Erfindung auch einheitliche, z.B. schaumartige, Liegeauflagen als Ruheeinheiten mit übereinstimmenden Liegeparametern verwendet werden, die einen gleichen bevorzugt mittleren Härtewert aufweisen. Dies ist besonders vorteilhaft bei der Verwendung einer Kombination von Matratze und Unterfederung z.B. mit einstellbarem Lattenrost als steuerbare Ruheeinheit. Matratzen dieser Art sind kostengünstig anschaffbar und auch regelmäßig erneuerbar.

Die Erfindung und weitere vorteilhafte Ausführungen derselben werden an Hand von in denen Figuren dargestellten Ausführungsbeispielen nachfolgend näher erläutert. Dabei zeigt
- Fig. 1: eine schematische seitliche Schnittdarstellung einer erfindungsgemäßen Anordnung mit einer singulären Ruheeinheit,
- Fig. 2: einen ersten beispielhaften schematischen Höhenverlauf in der Ruheeinheit von Figur 1,
- Fig. 3: einen zweiten beispielhaften schematischen Höhenverlauf in der Ruheeinheit von Figur 1,
- Fig. 4: einen beispielhaften schematischen Härteverlauf in der Ruheeinheit von Figur 1,
- Fig. 5: eine schematische seitliche Schnittdarstellung einer bevorzugten Ausführung einer Ruheeinheit mit einer Matratze und einer über Aktoren einstellbaren Unterfederung, und
- Fig. 6: ein Blockschaltbild einer erfindungsgemäßen Anordnung mit einer Vielzahl von bevorzugt baugleichen Ruheeinheiten insbesondere in einer Beherbergungseinrichtung für Personen, z.B. einem Hotel.

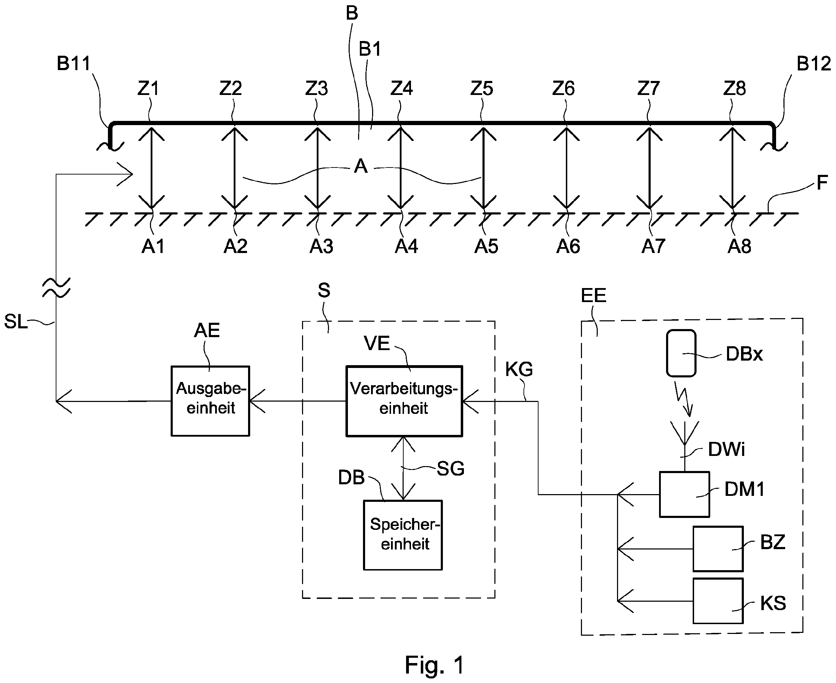

Fig. 1 zeigt schematisch eine erfindungsgemäße Anordnung mit einer autarken, alleinstehenden Ruheeinheit B. Diese verfügt über eine insbesondere gepolsterte Liege- und Sitzfläche B1, worauf sich eine oder mehrere Personen hinlegen und auch z.B. vorübergehend Platz nehmen können.

Auf die Liege- und Sitzfläche B1 der einen Ruheeinheit B kann zumindest ein Aktor A zur Einstellung eines individuellen, an physikalische Körperparameter der jeweiligen Person angepassten Höhen- und/oder Härteverlaufs in der Liege- und Sitzfläche einwirken. Dabei wird der zumindest eine Aktor auf einer symbolisch dargestellten Aufstellfläche F abgestützt, z.B. einem Fußboden. Einer Person, die an einer Seite der Liege- und Sitzfläche Platz genommen hat oder sich auf dieser bevorzugt horizontal hingelegt hat, kann auf diese Weise ein körpergerechtes Einsinken und eine gezielte Entlastung bzw. Unterstützung einzelner Körperpartien ermöglicht werden. Abhängig von physikalischen Körperparametern der jeweiligen Person, z.B. Größe, Gewicht, Geschlecht und Körperform, kann diese somit eine insbesondere angenehme, ergonomische und gesunde Liegeposition einnehmen.

Im Beispiel der Fig. 1 ist bevorzugt eine Vielzahl von separat ansteuerbaren Aktoren A über die gesamte Liege- und Sitzfläche B1 zwischen den gegenüber liegenden Kanten B11 und B12 bevorzugt annähernd gleichmäßig verteilt angeordnet. Handelt es sich bei der dargestellten Liege- und Sitzfläche B1 um die Auflageoberseite z.B. einer Matratze, so können die Kanten B11 und B12 einem Kopf- und Fußende zugeordnet sein. Dabei wirken die einzelnen, beispielhaften Aktoren A1, A2, A3, A4, A5, A6, A7 und A8 auf unterschiedliche Zonen Z1, Z2, Z3, Z4, Z5, Z6, Z7 und Z8 in der Liege- und Sitzfläche ein. Handelt es sich bei der beispielhaften Ruheeinheit B in Fig. 1 um ein Bett mit einer Liegematratze, so können sich die Zonen Z1 bis Z8 und die Eingriffsbereiche der einzelnen Aktoren streifenförmig quer über die Fläche B1 erstrecken und z.B. jeweils einem Kopf-, Schulter-, Rücken-, Lenden-, Gesäß-, Oberschenkel-, Unterschenkel- und Fußbereich zugordnet sein.

In Fig. 1 sind die annähernd orthogonal zur Aufstellfläche F verlaufenden Wirkungspfeile der Aktoren A1 ... A10 nur beispielhaft. Bei anderen, nicht dargestellten Ausführungsformen können die Aktoren auch anders verteilt sein und in unterschiedlichen Raumrichtungen auf die Liege- und Sitzfläche einwirken. Abhängig vom mechanischen Aufbau und der physikalischen Wirkungsweise der jeweiligen Aktoren können diese z.B. auch seitlich horizontal bzw. in Form einer Matrix schachbrettartig flächig verteilt angeordnet sein und punktförmig auf die Liege- und Sitzfläche einwirken.

Erfindungsgemäß ist die Anordnung von Fig. 1 mit insbesondere elektronischen Eingabemitteln EE und einer Steuereinrichtung S ausgestattet. Hierüber kann eine Person einen Eingabewert KG datentechnisch in eine Steuereinrichtung S eingeben, welcher der Konfektionsgröße eines Bekleidungsstücks dieser Person in einem Bekleidungsgrößensystem entspricht. Die Steuereinrichtung S leitet aus dem Eingabewert KG der Konfektionsgröße Steuersignale SL für die Aktoren A derart ab und gibt diese an die Aktoren A1 ... A8 aus, so dass in der Liege- und Sitzfläche B1 ein Höhen- und/oder Härteverlauf, welcher an physikalische Körperparameter der durch die Konfektionsgröße repräsentierten Person angepasst ist, selbststätig voreingestellt werden kann.

Die Erfindung macht somit eine vollautomatische, individualisierte und schnelle Vorparametrierung insbesondere der Liegeparameter der Liege- und Sitzfläche möglich. Dies erspart es einer Person, ein angepasstes Liegeverhalten erst selbst mühsam durch manuelle und sukzessive Betätigung u.U. einer Vielzahl von Aktoren einzustellen. Diese Voreinstellung kann an Hand des Eingabewertes der Konfektionsgröße in der Regel bereits so passend vorgenommen werden, dass eine Person nur selten durch manuelle Nachverstellung noch Feinjustierungen muss. Die Erfindung ermöglicht es einer Person bereits eine Voreinstellung schnell und präzise bereits vorzunehmen, bevor diese die Ruheeinheit benutzt hat. Befindet sich die erfindungsgemäße Anordnung in einem Schlafraum, z.B. einem Hotelzimmer, so kann die Vorparametrierung der Liegeparameter der Liege- und Sitzfläche von einer Person bereits beim Betreten des Raumes durch einfache Eingabe von deren Konfektionsgröße in die Eingabemittel vorgenommen werden.

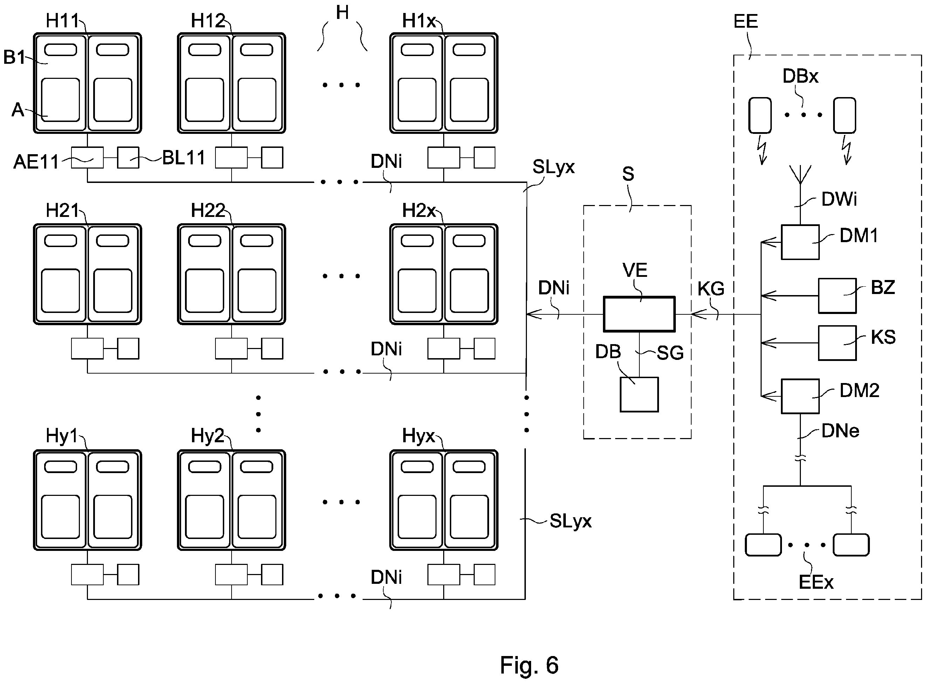

Eine Anordnung gemäß der Erfindung ist somit geeignet zum Einsatz in Beherbergungseinrichtungen, z.B. Hotels und Herbergen, aber auch Krankenhäusern, Sanatorien, Passierschiffen, Großraumflugzeugen, Biwaks, Camps, Siedlungen. Diese Einrichtungen verfügen über eine Vielzahl von Ruheeinheiten, z.B. Betten, die von ständig wechselnden Personen mit unterschiedlichsten physikalischen Körperparametern genutzt werden. Mit Hilfe der Erfindung der Nutzungskomfort in derartigen Großeinrichtungen erheblich gesteigert werden. Eine besonders vorteilhafte weitere Ausführungsform dieser Art wird nachfolgend am Beispiel der Fig. 6 noch näher erläutert werden.

Fig. 1 zeigt weiterhin beispielhaft eine besonders vorteilhafte Ausführung der Erfindung. Dabei weist die Steuereinrichtung S zusätzlich eine Speichereinheit DB auf, in der für jeden Konfektionsgrößenwert in einem Bekleidungsgrößensystem ein zugeordneter Datensatz SG hinterlegt ist. Eine Verarbeitungseinheit VE, welche mit dem Eingabemittel EE verbunden ist, liest den zu einem Eingabewert KG korrelierenden Datensatz SG aus, leitet die dazugehörigen Steuersignale SL für die Aktoren A ab und gibt diese zur selbsttätigen Voreinstellung an die Aktoren A aus. Die Liege- und Sitzfläche B1 der Ruheeinheit nimmt daraufhin erfindungsgemäß einen zur eingegebenen Konfektionsgröße und den dadurch repräsentierten physikalischen Körperparametern der dazugehörigen Person angepassten Höhen- und/oder Härteverlauf an.

Bei einer vorteilhaften und im Beispiel der Fig. 1 ebenfalls bereits dargestellten Ausführung werden die Steuersignale über eine zusätzliche Ausgabeeinheit AE ausgegeben. Diese bildet hieraus Steuersignale SL, welche zur direkten Ansteuerung der auf die Liege- und Sitzfläche B1 einwirkenden Aktoren A geeignet sind. Diese Steuersignale sind somit vorteilhaft bereits signaltechnisch an das jeweilige physikalische Wirkungsprinzip der verwendeten Aktoren angepasst und ermöglichen eine unmittelbare, sofortige Ansteuerung derselben.

Erfindungsgemäß entsprechen die Eingabewerte KG einer Konfektionsgröße aus einem Bekleidungsgrößensystem. Dabei können alle möglichen Bekleidungsgrößensysteme berücksichtigt und z.B. in Form von Datensätzen SG in der Speichereinheit DB datentechnisch bevorratet werden. Für eine Person ist es besonders einfach, den aktuellen Größenwert z.B. an einem persönlichen Bekleidungsstück abzulesen und über die Eingabemittel der erfindungsgemäßen Anordnung mitzuteilen. Als Bekleidungsgrößensystem können internationale Konfektionsgrößensysteme für Damen, Herren und Kinder verwendet werden. Es können auch nationale Bekleidungsgrößensysteme, z.B. deutsche, englische, französische und italienische Normalgrößensysteme, oder z.B. Schuh- und Sportbekleidungsgrößensysteme verwendet werden. Die Erfindung ermöglicht es einer Person mittels eines Eingabewertes aus einem Bekleidungsgrößensystem, z.B. für Damen-, Herren- bzw. Kinderoberbekleidung, für Damen- bzw. Herrenhosen, für Hemden oder Sportbekleidung, die Aktoren so zu parametrieren, dass in der Liege- und Sitzfläche ein angepasster Höhen- und/oder Härteverlauf voreingestellt wird.

In der Speichereinheit DB können z.B. aus Messreihen mit Probanden empirisch gefundene und einzelnen Konfektionsgrößen zugeordnete Steuersignale SL für die jeweiligen Aktoren abgespeichert werden. So können mit der Liege- und Sitzfläche einer Ruheeinheit Reihenmessungen mit Personen durchgeführt werden, welche Konfektionsgrößen aufweisen, die möglichst den gesamten Wertebereich eines Bekleidungsgrößensystems abdecken. Für jede dieser Personen kann ein individuell angepasster Höhen- und/oder Härteverlauf, welcher von dieser als angenehm empfunden wird, ermittelt und gespeichert werden.

Die Eingabemittel EE können z.B. ein lokales Bedienelement BZ aufweisen, das direkt an die Steuereinrichtung S angeschlossen ist. Handelt es sich dabei z.B. um eine kabelgebundene Handbedieneinheit, so kann eine Person ihre Konfektionsgröße z.B. mit einer Tastatur oder einem Bildschirmmenü unmittelbar vor Ort eingegeben, z.B. neben der Ruheeinheit B. Eine Handbedieneinheit ermöglicht es der Person zudem, auf einfache Weise gegebenenfalls manuelle Korrekturen bei der Einstellung der Liege- und Sitzfläche vorzunehmen.

Bei einer weiteren Ausführung der Erfindung können als Eingabemittel EE auch persönliche elektronische Geräte einer Person dienen, welche die Ruheeinheit nutzt möchte. So können persönliche Mobilgeräte DBx, z.B. Mobil- oder Smartphones, Tabletts, Notebooks usw., die über ein Funknetzwerk DWi und eine erste Datenschnittstelle DM1 an die Steuereinrichtung S der Anordnung von Fig. 1 ankoppelbar sind, zur Eingabe der Konfektionsgröße genutzt werden.

Bei einer weiteren, in Fig. 1 bereits dargestellten Ausführung der Erfindung kann der benötigte Eingabewert der Konfektionsgröße auch messtechnisch insbesondere mit einem Ganzkörperscanner KS erfasst und der Steuereinrichtung zugeführt werden. Einer Person wird die Bedienung der Erfindungsgemäßen Anordnung hierdurch weiter erleichtert falls, z.B. der Konfektionsgrößenwert nicht verfügbar ist. Zudem kann mit einem derartigen Eingabemittel die Erfassung und Eingabe der Konfektionsgröße vollständig automatisiert werden, so dass keine Eingabe durch die jeweilige Person mehr erforderlich ist.

Ein Ganzkörperscanner KS kann auf unterschiedliche Weise ausgeführt sein. So kann dieser z.B. in einem Türrahmen integriert sein und den benötigen Konfektionsgrößenwert z.B. beim Betreten eines mit einer erfindungsgemäßen Anordnung ausgestatteten Hotelzimmers durch die jeweilige Person selbsttätig erfassen und vollautomatisch an die Steuereinrichtung übermitteln. Gegebenenfalls kann ein Ganzkörperscanner KS auch Teil einer Sicherheitsvorrichtung sein, und z.B. zentral in einem Zugangs- bzw. Empfangsbereich z.B. eines Hotels oder Krankenhauses, dem Abfertigungsbereich eines Flughafens, dem Eingangsbereich zu einem Passagierschiff usw. platziert sein.

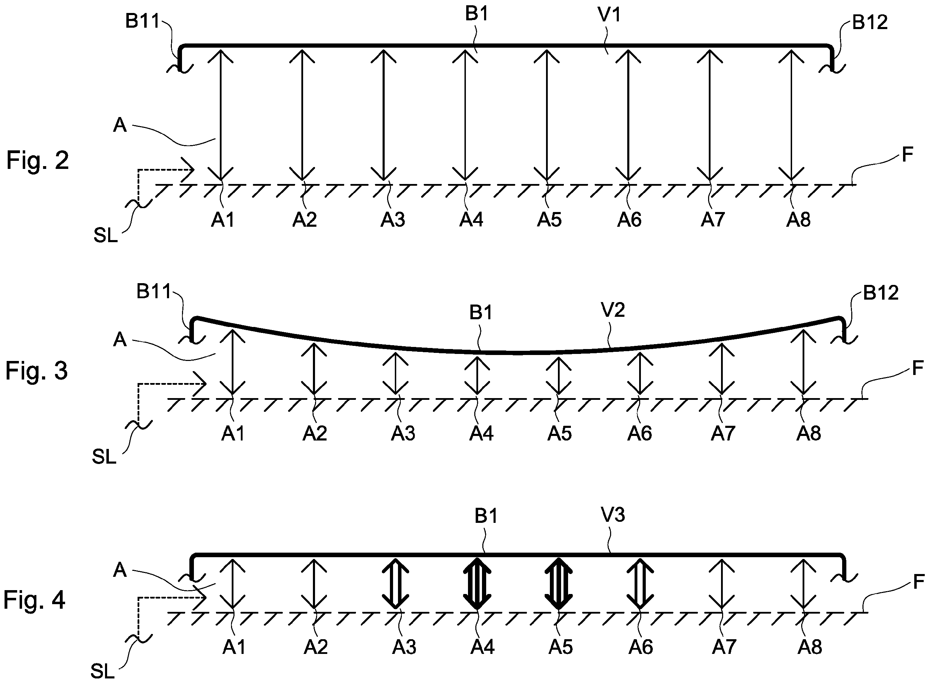

Fig. 2 zeigt einen ersten beispielhaften Höhenverlauf V1 einer exemplarischen Ruheeinheit B in einer erfindungsgemäßen Anordnung. Dabei sind alle Aktoren A gleichartig derart gesteuert, dass die Liege- und Sitzfläche B1 der Ruheeinheit B annähernd eine Ebene darstellt und parallel zu einer Aufstellfläche F verläuft. Eine derartige gleichmäßige Anhebung oder Absenkung der gesamten Liege- und Sitzfläche kann beispielsweise dadurch herbeigeführt werden, dass über die Signalleitung SL alle Aktoren A1, A2, A3, A4, A5, A6, A7 mit dem gleichen Steuersignal ansteuert werden. Hiermit ist es vorteilhaft möglich, z.B. die Sitzhöhe an einer Kante B11, B12 auf die Körpergröße einer Person voreinzustellen, d.h. für eine große Person anzuheben und für eine kleine Person abzusenken. Besonders älteren Personen kann damit der Ein- und Ausstieg in und aus einer als Bett genutzten Ruheeinheit erleichtert werden.

Bei einem weiteren Höhenverlauf bildet die Liege- und Sitzfläche B1 ebenfalls annähernd eine Ebene. Die Aktoren werden dabei derart angesteuert, dass die gesamte Liege- und Sitzfläche einen Kippwinkel einnimmt, also schräg zur Aufstellfläche F steht. Stellt die Kante B12 z.B. den Fußbereich eines Bettes dar, so kann diese relativ zur Kante B11 am Kopfbereich z.B. abgesenkt werden.

In Fig. 3 ist ein weiterer beispielhafter Höhenverlauf V2 dargestellt. Dabei sind die zur oberen und unteren Kante B11, B12 spiegelbildlich gegenüberliegenden Aktoren paarweise zur Mitte der Liege- und Sitzfläche B1 hin unterschiedlich angesteuert. So sind die Aktoren A1, A8 mehr aktiviert als die Aktoren A2, A7. Die weiter innen liegenden Aktoren A3, A6 sind nur geringfügig aktiviert und die Aktoren A4, A5, welche auf die Mitte der Liege- und Sitzfläche einwirken, befinden sich in einer unteren Ruhelage. Auf diese Weise nimmt die Liege- und Sitzfläche einen muldenförmigen, annähernd symmetrisch konvexen Verlauf ein, der mit einer Hängematte vergleichbar ist. Es sind auch Höhenverläufe mit einer wellenförmigen Kontur der Liege- und Sitzfläche einstellbar, welche der Silhouette einer auf einer Seite liegenden Person angenähert ist.

Fig. 4 zeigt einen beispielhaften Härteverlauf V3 einer Ruheeinheit B in einer erfindungsgemäßen Anordnung. Hierbei sind die Aktoren A über die Signalleitung SL derart angesteuert, dass die Liege- und Sitzfläche von oben einwirkenden Druckbelastungen vorzugsweise zonenweise unterschiedliche Widerstände entgegenstellt. Diese sind in Fig. 4 durch unterschiedliche Pfeildarstellungen und Strichstärken symbolisiert. So ruft ein Aktor, der durch einen Pfeil mit dicker Mehrfachlinie dargestellt ist einen höheren Widerstand und somit eine höhere Härte in der Liege- und Sitzfläche hervor als ein Aktor, der durch einen Pfeil mit weniger Linien in einer dünneren Strichstärke dargestellt ist.

Somit rufen im Beispiel der Fig. 4 die Aktoren A4, A5 eine größere Härte als die jeweils daneben angeordneten Aktoren A3, A6 hervor. Die Aktoren A1, A2 und A7, A8 rufen die geringsten Härten hervor. Ein solcher Härteverlauf reduziert das Einsinken einer Person in den Gesäß- und Lendenwirbelbereichen ohne die Nachgiebigkeit in den Kopf-, Schulter- und Beinbereichen bei den Aktoren A1, A2 und A7, A8 zu beeinträchtigen. Die jeweils dazwischenliegenden Aktoren A3, A6 stellen in den Übergangsbereichen mittlere Härtewerte in der Liege- und Sitzfläche ein. Besonders vorteilhaft werden die Aktoren in der Praxis derart angesteuert, dass sowohl ein Höhen- als auch Härteverlauf einer Liege- und Sitzfläche kombiniert einstellbar ist. Eine solche Ausführung ergibt sich durch eine Überlagerung z.B. der Darstellungen in den Figuren 3 und 4.

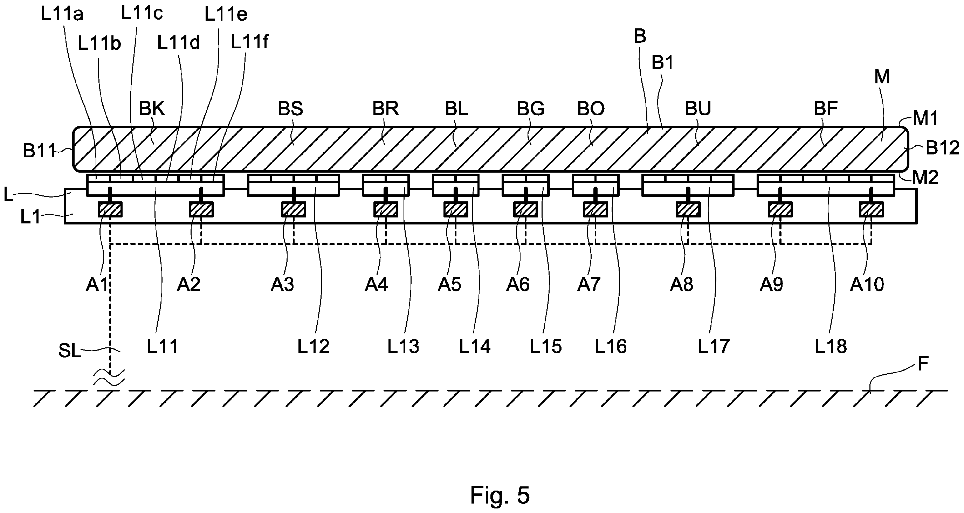

Fig. 5 zeigt schematisch in einer seitlichen Schnittansicht eine besonders vorteilhafte Ruheeinheit B für eine erfindungsgemäße Anordnung. Dabei ist die Liege- und Sitzfläche B1 als Sitz- und Liegeoberseite M1 einer Matratze M ausgeführt. Die Matratze M ist vorteilhaft auf eine einstellbare Unterfederung vorteilhaft in Form eines Lattenrosts L aufgelegt, worauf die Aktoren zur Einstellung eines Höhen- und/oder Härteverlaufs in der Liege- und Sitzfläche der Matratze einwirken. Der Lattenrost L weist Teilfederbereiche auf, die quer über die Breite der Matratze M verlaufen, diese abschnittsweise stützen und mit einem Rahmen L1 verbunden sind. Im Beispiel der Fig. 5 weisen die Teilfederbereiche mehrere Querlatten auf, die mit der Auflageunterseite M2 der Matratze M kontaktieren. So weist z.B. der Teilfederbereich L11 die Querlatten L11a, L11b, L11c, L11d, L11e, L11f auf. Den Teilfederbereichen ist jeweils zumindest ein Aktor zur Einstellung der Höhe bzw. der Härte im jeweiligen Teilfederbereich zugeordnet. Die Teilfederbereiche sind über die gesamte Länge der Matratze M zwischen der oberen und unteren Kante B11, B12 bevorzugt entsprechend den Körperbereichen einer Person bemessen und angeordnet.

So ist beispielhaft der Teilfederbereich L11 im Kopfbereich der Matratze M angeordnet und durch die Aktoren A1, A2 einstellbar. Der Teilfederbereich L12 ist beispielhaft im Schulterbereich BS angeordnet und mit Hilfe des Aktors A3 einstellbar. Der Teilfederbereich L13 ist im Rückenbereich BR angeordnet und durch den Aktor A4 einstellbar. Der Teilfederbereich L14 ist im Lendenbereich angeordnet und durch den Aktor A5 einstellbar. Weiterhin ist im Ausführungsbeispiel der Fig. 5 der Teilfederbereich L15 im Gesäßbereich BG der Matratze M angeordnet und durch den Aktor A6 einstellbar, der Teilfederbereich L16 im Oberschenkelbereich angeordnet und durch den Aktor A7 einstellbar, der Teilfederbereich L17 im Unterschenkelbereich BU angeordnet und über den Aktor A8 einstellbar und der Teilfederbereich L18 im Fußbereich BF der Matratze M angeordnet und ist über die Aktoren A9, A10 einstellbar.

Die Anordnung von zumindest zwei Aktoren pro Teilfederbereich ermöglicht sowohl die Einstellung der Höhe als auch der Härte des jeweiligen Teilfederbereiches. Hiermit sind eine Vielzahl individueller, an physikalische Körperparameter einer Person angepasste Einstellungen der Liege- und Sitzfläche möglich. So sind die Höhen der Teilfederbereiche zueinander z.B. stufen- bzw. rampenartig veränderbar. Weiterhin kann für eine Person z.B. im Bereich des Oberkörpers eine annähernd aufrechte Sitzposition, im Fußbereich eine erhöhte Liegeposition der Beine und im Beckenbereich eine größere Härte vorgegeben werden. Bei einer weiteren Ausführung können sowohl die Teilfederbereiche als auch deren Querlatten zur Erzeugung eines Höhen- und/oder Härteverlaufs separat einstellbar sein. Eine weitere Ausführung weist zumindest eine einstellbare Matratze auf, worauf die steuerbaren Aktoren zur Einstellung eines Höhen- und/oder Härteverlaufs direkt einwirken. Eine solche Anordnung kann z.B. bei Boxspringbetten eingesetzt werden.

Bei einer Ausführung der Erfindung mit einer Ruheeinheit in Form einer einstellbaren Unterfederung, worauf die Aktoren einwirken, und einer darauf aufgelegten Matratze ist es besonders vorteilhaft, wenn die Matratze M eine Liegehärte in einem mittleren Wertebereich aufweist, und die Aktoren ausgehend von einer Ruhestellung so steuerbar sind, dass ein zunehmender oder abnehmender Höhen- und/oder Härteverlauf in der Liege- und Sitzfläche der Matratze einstellbar ist. Mit einer solchen Anordnung ist es möglich, einen besonders fein abgestuften Höhen- und/oder Härteverlauf in der Liege- und Sitzfläche mit einem besonders großen Wertebereich einzustellen. Zudem ist eine solche Matratze, welche eine mittlere Härte aufweist, besonders anpassungsfähig. So können die Aktoren in einem solchen Fall ausgehend von einer mittleren Nullposition die Liege- und Sitzfläche der Matratze in ausgewählten Bereichen gezielt verfestigen bzw. erweichen. Zudem kann eine solche Matratze in der Regel einfach aufgebaut und somit kostengünstig sein. Insbesondere bei Einsatz einer Vielzahl von erfindungsgemäßen Anordnungen in einer Beherbergungsvorrichtung ist somit wirtschaftlich möglich, solche Matratzen regelmäßig aus hygienischen Gründen zu erneuern.

Fig. 6 zeigt ein Blockschaltbild einer erfindungsgemäßen Anordnung H mit einer Vielzahl von bevorzugt baugleichen, einstellbaren Ruheeinheiten. Eine solche Ausführung ist besonders zum Einsatz in einer Beherbergungseinrichtung für Personen geeignet. Dabei kann es sich um ein Hotel, Krankenhaus bzw. Sanatorium, d.h. um eine Einrichtung zur vorübergehenden Beherbergung einer Vielzahl von häufig wechselnden Personen, Patienten und Gästen handeln. Eine solche Anordnung mit einer u.U. großen Anzahl an Ruheeinheiten für jeweils zumindest eine Person kann auch bei anderen Einrichtungen auftreten, z.B. in einem Passierschiff, Großraumflugzeug, einer Siedlung von zu einer Gruppe gehörigen Blockhäusern in einer Ferien- und Freizeitanlage und vielem mehr. In allen diesen Fällen kann mit Hilfe der Erfindung eine erhebliche Vereinfachung der Bedienung der einstellbaren Ruheeinheiten und eine Verbesserung des Liege- und Schlafkomforts für die Nutzer erreicht werden.

So sind im Blockschaltbild von Fig. 6 die Ruheeinheiten H11, H12 ... H1x z.B. in einer ersten Einheit, z.B. einer ersten Etage eines Gebäudes, die Ruheeinheiten H21, H22 ... H2x in einer zweiten Einheit, z.B. einer weiteren Etage des Gebäudes, und die Ruheeinheiten Hy1, Hy2 ... Hyx in einer weiteren Einheit, z.B. einem anderen Gebäude eines Komplexes von mehreren zusammenhängenden Gebäuden, beispielhaft angeordnet. Jede dieser Ruheeinheiten weist zumindest eine Liege- und Sitzfläche B1 für jeweils zumindest eine Person auf. Über zumindest einen Aktor A, welcher auf die Liege- und Sitzfläche B1 einwirken kann, ist eine personenindividuelle Einstellung eines Höhen- und/oder Härteverlaufs in der Liege- und Sitzfläche wiederum abhängig von einer Konfektionsgröße als Eingabewert möglich.

Während es einer Person bei der in Fig. 1 dargestellten Ausführung der Erfindung mit Hilfe von lokalen Eingabemitteln möglich ist, den Eingabewert der Konfektionsgröße vor Ort in die Steuereinheit einzugeben, d.h. in unmittelbarer Nähe zu der zugeordneten Ruheeinheit, bietet die in Fig. 6 dargestellten Ausführung der Erfindung eine sogenannte Netzwerklösung.

Dabei sind die im Beispiel der Fig. 6 dargestellten Eingabemittel EE für einen Eingabewert KG, welcher wiederum der Konfektionsgröße eines Bekleidungsstücks einer bestimmten Person in einem Bekleidungsgrößensystem entspricht, bevorzugt zentral angeordnet und machen eine datentechnische Kopplung zu einer jeden einzelnen, ausgewählten Ruheeinheit in der Anordnung H möglich. Hierzu sind die Eingabemittel EE über eine wiederum bevorzugt zentrale Steuereinrichtung S und ein Datennetzwerk DNi mit jeder Ruheeinheit Hyx verbunden. An der Ruheeinheit H11 ist dies beispielhaft für alle Ruheeinheiten Hyx gezeigt. Dabei wird das für die Ruheeinheit H11 vorgesehene Steuersignal SLyx z.B. von einer lokalen Ausgabeeinheit AE11 aus dem Datennetzwerk DNi ausgelesen und dem zumindest einen Aktor A zugeführt, um die dortige Liege- und Sitzfläche B1 entsprechend voreinstellen zu können. Eine zusätzliches lokales Bedienelement BL11, z.B. eine Handbedienung, ermöglicht es einer Person bei Bedarf Feinjustierungen im Höhen- und/oder Härteverlauf der Liege- und Sitzfläche B1 der Ruheeinheit H11 vorzunehmen.

Die Steuerung S im Beispiel der Fig. 6 ist bevorzugt in der gleichen Weise aufgebaut, wie dies bereits am Beispiel der Steuerung S in Fig. 1 beschrieben wurde, jedoch zentral zwischen den Eingabemitteln EE und der Schnittstelle zum Datennetzwerk DNi angeordnet. Diese leitet wiederum aus einem Eingabewert KG ein Steuersignal SLyx für den zumindest einen Aktor A in einer ausgewählten Ruheeinheit Hyx ab, so dass durch diesen in einer dortigen Liege- und Sitzfläche B1 ein Höhen- und/oder Härteverlauf selbstständig voreinstellbar ist, welcher an physikalische Körperparameter der durch die Konfektionsgröße repräsentierten Person angepasst ist. Das derart gebildete Steuersignal SLxy wird von der Steuereinrichtung Sz über das Datennetzwerk DNi an den zumindest einen Aktor A einer Ruheeinheit Hyx ausgegeben, welche der bestimmten Person zugeteilt oder von dieser gezielt ausgewählt wurde.

Diese Ausführungen der Erfindung ermöglicht eine übergeordnete Eingabe der Eingabewerte der Konfektionsgrößen für beliebige Personen sowie die Verteilung und gezielte Übergabe eines hieraus abgeleiteten Steuersignals an eine speziell dieser Person zugeordnete Ruheeinheit z.B. in einem reservierten Hotelzimmer. Hierzu kann als ein Eingabemittel EE z.B. ein Bedienelement BZ an einer Rezeption einer Beherbergungseinrichtung genutzt werden, z.B. eine zentrale Tastatur. Als Eingabeeinheiten EE können auch persönliche Mobilgeräte DBx derjenigen Personen dienen, die z.B. in einem Hotel eine Ruheeinheit gebucht haben. Als Mobilgeräte sind z.B. Smartphones, Tablet-PCs und andere kabellose Bediengeräte verwendbar, die im Beispiel der Fig. 6 über ein Funknetzwerk DWi und eine erste Datenschnittstelle DM1, z.B. ein Funkmodem, mit der Steuereinrichtung datentechnisch verbunden sind.

Die Eingabeeinheit EE kann auch mit einem Ganzkörperscanner KS zur automatischen Erfassung zumindest eines physikalischen Körperparameters von Personen und der selbsttätigen Ableitung eines jeweils dazugehörigen Eingabewertes KG ausgestattet sein. Dabei können z.B. Gewicht, Größe und Umriss einer Person erfasst und einer Konfektionsgröße zugeordnet werden. Eine derartige Ausführung wurde bereits am Beispiel der Fig. 1 beschrieben.

Die im Beispiel der Fig. 6 dargestellte, quasi datentechnisch vernetzte Ausführung einer Anordnung gemäß der Erfindung bietet den weiteren besonderen Vorteil, das als Eingabemittel (EE) auch persönliche Bediengeräte EEx dienen können, insbesondere Personal Computer, die über das Internet DNe und eine zweite Datenschnittstelle DM2 an die Steuereinrichtung S ankoppelbar sind. Dies ermöglicht es Kunden, die z.B. über ein Internetportal den Aufenthalt in einem Hotel buchen, durch zusätzliche Eingabe der persönlichen Konfektionsgröße zugleich einen anpassten Höhen- und Härteverlauf in der Liege- und Sitzfläche bei derjenigen Ruheeinheit vorzugeben, die von ihnen während des zukünftigen Hotelaufenthalts benutzt werden wird.

Zusätzlich zu diesen Vorteilen, welche vor allem den Personen zu Gute kommen, die eine Anordnung gemäß der Erfindung benutzen wollen, bietet die Erfindung auch z.B. dem Betreiber einer mit erfindungsgemäßen Anordnungen ausgestatteten Beherbergungseinrichtung Vorteile. So können alle Ruheeinheiten, insbesondere deren Polster und Matratzen, identisch ausgeführt sein. Dies erleichtert deren Anschaffung, Pflege und gegebenenfalls Austausch erheblich. Bevorzugt weisen die Liege- und Sitzflächen der Ruheeinheiten in einem Ruhezustand der Aktoren zumindest einen übereinstimmenden Liegeparameter auf, insbesondere den gleichen Härtewert. Zudem können diese aus den gleichen Materialien bestehen, die vorher z.B. auf Umweltverträglichkeit, Dauerhaftigkeit und Schadstofffreiheit getestet worden sind.

### Bezugszeichen

- B: Ruheeinheit
- B1: Liege- und Sitzfläche
- B11, B12: Kanten, insbesondere Kopf- und Fußende
- BK: Kopfbereich
- BS: Schulterbereich
- BR: Rückenbereich
- BL: Lendenbereich
- BG: Gesäßbereich
- BO: Oberschenkelbereich
- BU: Unterschenkelbereich
- BF: Fußbereich
- Z: Zonen
- Z1, Z2 ... Z8: erste, zweite, ... achte Zone
- A: Aktoren
- A1, A2 ... A10: erster, zweiter ... zehnter Aktor
- M: Matratze
- M1: Sitz- und Liegeoberseite
- M2: Auflageunterseite
- L: Lattenrost
- L1: Rahmen
- L11 ... L18: Teilfederbereiche
- L11a ... L11f: Querlatten im ersten Teilfederbereich L11
- F: Aufstellfläche
- V1, V2: erster, zweiter Höhenverlauf
- V3: Härteverlauf
- EE: Eingabemittel
- KG: Eingabewert für eine Konfektionsgröße
- BZ: Bedienelement, z.B. Handbedienung oder zentrale Tastatur
- KS: Ganzkörperscanner, z.B. in zentralem Zugangsbereich
- DM1: erste Datenschnittstelle, z.B. ein Funkmodem
- DWi: Funknetzwerk
- DBx: persönliche Mobilgeräte, z.B. Smartphones
- DM2: zweite Datenschnittstelle, z.B. ein Netzwerkmodem
- DNe: Kommunikationsnetzwerk, z.B. Internet
- EEx: persönliche Bediengeräte, z.B. dezentrale PC
- S: Steuereinrichtung
- VE: Verarbeitungseinheit
- DB: Speichereinheit für Konfektions- und Steuergrößen
- SG: Datensätze für Konfektionsgrößen
- AE: Ausgabeeinheit an Ruheeinheit B
- SL: Steuersignal für den zumindest einen Aktor in B
- AE11: Ausgabeeinheit an Ruheeinheit H11
- SLyx: Steuersignal für den zumindest einen Aktor in H11
- H: Anordnung mit Ruheeinheiten z.B. in Hotel, Herberge, Krankenhaus, Passierschiff, Großraumflugzeug, Siedlung
- H11, H12 ... H1x: Ruheeinheiten mit Aktoren in einer ersten Einheit
- H21, H22 ... H2x: Ruheeinheiten mit Aktoren in einer zweiten Einheit
- Hy1, Hy2 ... Hyx: Ruheeinheiten mit Aktoren in weiteren Einheiten
- DNi: Datennetzwerk
- BL11: lokales Bedienelement der Ruheeinheit H11

## Patentansprüche

1. Anordnung, mit
- einer Ruheeinheit (B) für zumindest eine Person, mit
- zumindest einer Liege- und Sitzfläche (B1),
- zumindest einem Aktor (A; A1...A10), welcher auf die Liege- und Sitzfläche (B1) zur Einstellung eines Höhen- und/oder Härteverlaufs (V1, V2, V3) einwirken kann,
- Eingabemitteln (EE) für einen Eingabewert (KG), welcher der Konfektionsgröße eines Bekleidungsstücks einer bestimmten Person in einem Bekleidungsgrößensystem entspricht, und
- einer Steuereinrichtung (S), welche aufweist
- eine Speichereinheit (DB), welche Datensätze (SG) für die Konfektionsgrößen in einem Bekleidungsgrößensystem enthält, und
- eine Verarbeitungseinheit (VE), die mittels einem Eingabewert (KG) den der jeweiligen Konfektionsgröße zugeordneten Datensatz (SG) aus der Speichereinheit (DB) ausliest und hieraus ein Steuersignal (SL) ableitet und an den zumindest einen Aktor (A; A1...A10) ausgibt, so dass dieser in der Liege- und Sitzfläche (B1) einen Höhen- und/oder Härteverlauf selbstständig voreinstellt, welcher an physikalische Körperparameter der durch die Konfektionsgröße repräsentierten Person angepasst ist.

2. Anordnung (H), mit
- Ruheeinheiten (H11, H12, H1x; H21, H22, H2x; Hy1, Hy2, Hyx) für jeweils zumindest eine Person, wobei jede Ruheeinheit aufweist 15.01.2018
- zumindest eine Liege- und Sitzfläche (B1),
- zumindest einen Aktor (A; A1...A10), welcher auf die Liege- und Sitzfläche (B1) zur Einstellung eines Höhen- und/oder Härteverlaufs (V1, V2, V3) einwirken kann, und mit
- Eingabemitteln (EE) für einen Eingabewert (KG), welcher der Konfektionsgröße eines Bekleidungsstücks einer bestimmten Person in einem Bekleidungsgrößensystem entspricht, und
- einer zentralen Steuereinrichtung (S), welche aufweist
- eine Speichereinheit (DB), welche Datensätze (SG) für die Konfektionsgrößen in einem Bekleidungsgrößensystem enthält, und
- eine Verarbeitungseinheit (VE), die mittels einem Eingabewert (KG) den der jeweiligen Konfektionsgröße zugeordneten Datensatz (SG) aus der Speichereinheit (DB) ausliest und hieraus ein Steuersignal (SLyx) für den zumindest einen Aktor (A) ableitet, so dass durch diesen in einer Liege- und Sitzfläche (B1) ein Höhen- und/oder Härteverlauf selbstständig voreinstellbar ist, welcher an physikalische Körperparameter der durch die Konfektionsgröße repräsentierten Person angepasst ist, und mit
- einem Datennetzwerk (DNi) zur Verbindung der zentralen Steuereinrichtung (S) mit den Ruheeinheiten (Hxy), worüber die Steuereinrichtung (S) das Steuersignal (SLyx) an den zumindest einen Aktor (A) einer für die bestimmte Person aus den Ruheeinheiten (Hxy) ausgewählten Ruheeinheit (Hyx) ausgibt.

3. Anordnung (H), nach Anspruch 2, wobei
die Liege- und Sitzflächen der Ruheeinheiten in einem Ruhezustand der Aktoren zumindest einen übereinstimmenden Liegeparameter aufweisen, insbesondere den gleichen Härtewert.

4. Anordnung nach Anspruch 2 oder 3, wobei die Eingabemittel (EE) aufweisen
persönliche Bediengeräte (EEx), insbesondere Personal Computer, die über das Internet (DNe) und eine zweite Datenschnittstelle (DM2) an die Steuereinrichtung (S) ankoppelbar sind.

5. Anordnung nach einem der vorangegangenen Ansprüche, wobei die Eingabemittel (EE) aufweisen
persönliche Mobilgeräte (DBx), insbesondere Mobil- oder Smartphones, die über ein Funknetzwerk (DWi) und eine erste Datenschnittstelle (DM1) an die Steuereinrichtung (S) ankoppelbar sind.

6. Anordnung nach einem der vorangegangenen Ansprüche, wobei die Eingabemittel (EE) aufweisen
einen Ganzkörperscanner (KS).

7. Anordnung nach einem der vorangegangenen Ansprüche, wobei eine Ruheeinheit (B) aufweist
- zumindest eine Matratze (M) mit Liege- und Sitzfläche (B1), und
- eine einstellbare Unterfederung der Matratze (M), insbesondere einen einstellbaren Lattenrost (L), worauf die Aktoren (A) zur Einstellung eines Höhen- und/oder Härteverlaufes (V1, V2, V3) in der Liege- und Sitzfläche (B1) der Matratze (M) einwirken.

8. Anordnung nach Anspruch 7, wobei
- eine Matratze (M) eine Liegehärte in einem mittleren Wertebereich aufweist, und
- die Aktoren ausgehend von einer Ruhestellung so steuerbar sind, dass ein zunehmender oder abnehmender Höhen- und/oder Härteverlauf (V1, V2, V3) in der Liege- und Sitzfläche (B1) der Matratze (M) einstellbar ist.

9. Beherbergungseinrichtung für Personen, insbesondere ein Hotel, mit einer Anordnung nach einem der vorangegangenen Ansprüche.

10. Verfahren zur Steuerung einer Anordnung von Ruheeinheiten (H11, H12, H1x; H21, H22, H2x; Hy1, Hy2, Hyx) jeweils für zumindest eine Person, wobei jede Ruheeinheit eine Liege- und Sitzfläche (B1) mit einem einstellbaren Höhen- und/oder Härteverlauf aufweist, wobei
- ein Eingabewert (KG) vorgegeben wird, welcher der Konfektionsgröße eines Bekleidungsstücks einer bestimmten Person in einem Bekleidungsgrößensystem entspricht,
- aus dem Eingabewert (KG) ein Steuersignal (SL) so abgeleitet wird, dass dadurch in der Liege- und Sitzfläche einer Ruheeinheit ein Höhen- und/oder Härteverlauf, welcher an physikalische Körperparameter der durch die Konfektionsgröße repräsentierten Person angepasst ist, selbstständig voreinstellbar ist, und
- das Steuersignal (SL) an eine für die bestimmte Person ausgewählte Ruheeinheit (H11) der Anordnung ausgegeben wird.

11. Verfahren nach Anspruch 10, wobei der Eingabewert (KG)
von der bestimmten Person über das Internet (DNe) vorgebbar ist.

12. Verfahren nach Anspruch 10 oder 11, wobei der Eingabewert (KG)
von der bestimmten Person mittels eines persönlichen Mobilgerätes (DBx) vorgebbar ist, insbesondere eines Mobil- oder Smartphones.

13. Verfahren nach Anspruch 10, 11 oder 12, wobei der Eingabewert (KG)
von der bestimmten Person mittels eines Ganzkörperscanners (KS) selbsttätig bestimm- und eingebbar ist.

## Claims

1. Arrangement having
- a resting unit (B) for at least one person, having
- at least one lying and sitting area (B1),
- at least one actuator (A; A1...A10) which can act on the lying and sitting area (B1) for the purpose of adjusting a height and/or hardness profile (V1, V2, V3),
- input means (EE) for an input value (KG) corresponding to the clothing size of an item of clothing of a particular person in a clothing size system, and
- a control device (S) having
- a storage unit (DB) containing data records (SG) for the clothing sizes in a clothing size system, and
- a processing unit (VE) which uses an input value (KG) to read out the data record (SG) assigned to the respective clothing size from the storage unit (DB) and derives a control signal (SL) therefrom and outputs said control signal to the at least one actuator (A; A1...A10), with the result that the latter independently presets, in the lying and sitting area (B1), a height and/or hardness profile adapted to physical body parameters of the person represented by the clothing size.

2. Arrangement (H) having
- resting units (H11, H12, H1x; H21, H22, H2x; Hy1, Hy2, Hyx) for at least one person in each case, wherein each resting unit has
- at least one lying and sitting area (B1),
- at least one actuator (A; A1...A10) which can act on the lying and sitting area (B1) for the purpose of adjusting a height and/or hardness profile (V1, V2, V3), and having
- input means (EE) for an input value (KG) corresponding to the clothing size of an item of clothing of a particular person in a clothing size system, and
- a central control device (S) having
- a storage unit (DB) containing data records (SG) for the clothing sizes in a clothing size system, and
- a processing unit (VE) which uses an input value (KG) to read out the data record (SG) assigned to the respective clothing size from the storage unit (DB) and derives a control signal (SLyx) therefrom for the at least one actuator (A), with the result that the latter can independently preset, in a lying and sitting area (B1), a height and/or hardness profile adapted to physical body parameters of the person represented by the clothing size, and having
- a data network (DNi) for connecting the central control device (S) to the resting units (Hxy), via which the control device (S) outputs the control signal (SLyx) to the at least one actuator (A) of a resting unit (Hyx) selected for the particular person from the resting units (Hxy).

3. Arrangement (H) according to Claim 2, wherein
the lying and sitting areas of the resting units have at least one matching lying parameter, in particular the same hardness value, in a state of rest of the actuators.

4. Arrangement according to Claim 2 or 3, wherein the input means (EE) have
personal operating devices (EEx), in particular personal computers, which can be coupled to the control device (S) via the Internet (DNe) and a second data interface (DM2).

5. Arrangement according to one of the preceding claims, wherein the input means (EE) have
personal mobile devices (DBx), in particular mobile phones or smartphones, which can be coupled to the control device (S) via a radio network (DWi) and a first data interface (DM1).

6. Arrangement according to one of the preceding claims, wherein the input means (EE) have
a full-body scanner (KS).

7. Arrangement according to one of the preceding claims, wherein a resting unit (B) has
- at least one mattress (M) having a lying and sitting area (B1), and
- adjustable underspringing of the mattress (M), in particular an adjustable slatted frame (L), on which the actuators (A) act for the purpose of adjusting a height and/or hardness profile (V1, V2, V3) in the lying and sitting area (B1) of the mattress (M).

8. Arrangement according to Claim 7, wherein
- a mattress (M) has a lying hardness in a middle range of values, and
- the actuators can be controlled starting from a rest position in such a manner that an increasing or decreasing height and/or hardness profile (V1, V2, V3) can be set in the lying and sitting area (B1) of the mattress (M).

9. Accommodation facility for persons, in particular a hotel, having an arrangement according to one of the preceding claims.

10. Method for controlling an arrangement of resting units (H11, H12, H1x; H21, H22, H2x; Hy1, Hy2, Hyx) for at least one person in each case, wherein each resting unit has a lying and sitting area (B1) with an adjustable height and/or hardness profile, wherein
- an input value (KG) corresponding to the clothing size of an item of clothing of a particular person in a clothing size system is predefined,
- a control signal (SL) is derived from the input value (KG) in such a manner that a height and/or hardness profile adapted to physical body parameters of the person represented by the clothing size can be independently preset thereby in the lying and sitting area of a resting unit, and
- the control signal (SL) is output to a resting unit (H11) of the arrangement that has been selected for the particular person.

11. Method according to Claim 10, wherein the input value (KG)
can be predefined by the particular person via the Internet (DNe).

12. Method according to Claim 10 or 11, wherein the input value (KG)
can be predefined by the particular person using a personal mobile device (DBx), in particular a mobile phone or a smartphone.

13. Method according to Claim 10, 11 or 12, wherein the input value (KG)
can be automatically determined and input by the particular person using a full-body scanner (KS).

## Revendications

1. Ensemble, comprenant
- une unité de repos (B) destinée à au moins une personne et comprenant
- au moins une surface de couchage et d'assise (B1),
- au moins un actionneur (A ; A1...A10) qui peut agir sur la surface de couchage et d'assise (B1) pour régler un profil de hauteur et/ou de dureté (V1, V2, V3),
- des moyens d'entrée (EE) destinés à une valeur d'entrée (KG) qui correspond à la taille de confection d'un vêtement d'une personne déterminée dans un système de taille de vêtement, et
- un dispositif de commande (S) qui comporte
- une unité de mémorisation (DB) qui contient des ensembles de données (SG) destinés à des tailles de confection dans un système de tailles de vêtement, et
- une unité de traitement (VE) qui lit au moyen d'une valeur d'entrée (KG) l'ensemble de données (SG), associé à la taille de confection respective, dans l'unité de mémorisation (DB) et qui dérive à partir de cet ensemble de données un signal de commande (SL) et le délivre à l'au moins un actionneur (A ; A1...A10) de sorte que celui-ci prérègle automatiquement dans la surface de couchage et d'assise (B1) un profil de hauteur et/ou de dureté qui est adapté à des paramètres corporels physiques de la personne représentée par la taille de confection.

2. Ensemble (H), comprenant
- des unités de repos (H11, H12, H1x ; H21, H22, H2x ; Hy1, Hy2, Hyx) destinées chacune à au moins une personne, chaque unité de repos comportant
- au moins une surface de couchage et d'assise (B1),
- au moins un actionneur (A ; A1...A10) qui peut agir sur la surface de couchage et d'assise (B1) pour régler un profil de hauteur et/ou de dureté (V1, V2, V3), et comprenant
- des moyens d'entrée (EE) destinés à une valeur d'entrée (KG) qui correspond à la taille de confection d'un vêtement d'une personne spécifique dans un système de tailles de vêtement, et
- un dispositif de commande central (S) qui comporte
- une unité de mémorisation (DB) qui contient des ensembles de données (SG) destinés aux tailles de confection dans un système de tailles de vêtement, et
- une unité de traitement (VE) qui lit au moyen d'une valeur d'entrée (KG) l'ensemble de données (SG), associé à la taille de confection respective, de l'unité de mémorisation (DB) et qui dérive de cet ensemble de données un signal de commande (SLyx) destiné à l'actionneur (A) de sorte que celui-ci peut prérégler automatiquement dans une surface de couchage et d'assise (B1) un profil de hauteur et/ou de dureté qui est adapté aux paramètres corporels physiques de la personne représentée par la taille de confection, et comprenant
- un réseau de données (DNi) destiné à relier le dispositif de commande central (S) aux unités de repos (Hxy), de manière à ce que le dispositif de commande (S) délivre le signal de commande (SLyx) à l'au moins un actionneur (A) d'une unité de repos (Hxy) choisie pour la personne déterminée parmi les unités de repos (Hyx).

3. Ensemble (H) selon la revendication 2,
les surfaces de couchage et d'assise des unités de repos ayant, lorsque les actionneurs sont au repos, au moins un paramètre de couchage correspondant, en particulier la même valeur de dureté.

4. Ensemble selon la revendication 2 ou 3, les moyens d'entrée (EE) comprenant
des dispositifs de commande personnels (EEx), en particulier des ordinateurs personnels, qui peuvent être couplés au dispositif de commande (S) via Internet (DNe) et une deuxième interface de données (DM2).

5. Ensemble selon l'une des revendications précédentes, les moyens d'entrée (EE) comprenant
des dispositifs mobiles personnels (DBx), en particulier des téléphones mobiles ou intelligents, qui peuvent être couplés au dispositif de contrôle (S) via un réseau radio (DWi) et une première interface de données (DM1).

6. Ensemble selon l'une des revendications précédentes, les moyens d'entrée (EE) comprenant
un scanner de corps entier (KS).

7. Ensemble selon l'une des revendications précédentes, une unité de repos (B) comprenant
- au moins un matelas (M) pourvu d'une surface de couchage et d'assise (B1), et
- un sommier réglable du matelas (M), en particulier un sommier à lattes réglable (L), sur lequel les actionneurs (A) peuvent agir pour régler un profil de hauteur et/ou de dureté (V1, V2, V3) dans la surface de couchage et d'assise (B1) du matelas (M).

8. Ensemble selon la revendication 7,
- un matelas (M) ayant une dureté dans une gamme de valeurs moyenne, et
- les actionneurs étant commandés à partir d'une position de repos de sorte qu'un profil de hauteur et/ou de dureté (V1, V2, V3) croissant ou décroissant dans la surface de couchage et d'assise (B1) du matelas (M) soit réglable.

9. Installation d'hébergement de personnes, en particulier un hôtel, comprenant un ensemble selon l'une des revendications précédentes.

10. Procédé de commande de l'ensemble d'unités de repos (H11, H12, H1x ; H21, H22, H2x ; Hy1, Hy2, Hyx) destinées chacune à au moins une personne, chaque unité de repos comportant une surface de couchage et d'assise (B1) présentant un profil de hauteur et/ou de dureté réglable,
- une valeur d'entrée (KG) étant prescrite laquelle correspond à la taille de confection d'un vêtement d'une personne déterminée dans un système de tailles de vêtement,
- un signal de commande (SL) étant dérivé de la valeur d'entrée (KG) de manière à prérégler automatiquement dans la surface de couchage et d'assise d'une unité de repos un profil de hauteur et/ou de dureté qui est adapté à des paramètres corporels physiques de la personne représentée par la taille de confection et
- le signal de commande (SL) étant délivré à une unité de repos (H11) de l'ensemble qui est sélectionnée pour la personne déterminée.

11. Procédé selon la revendication 10, la valeur d'entrée (KG) étant prescrite par la personne déterminée via Internet (DNe).

12. Procédé selon la revendication 10 ou 11, la valeur d'entrée (KG)
pouvant être prescrite par la personne déterminée au moyen d'un appareil mobile personnel (DBx), en particulier un téléphone mobile ou un smartphone.

13. Procédé selon la revendication 10, 11 ou 12, la valeur d'entrée (KG)
pouvant être déterminée et entrée automatiquement par la personne déterminée au moyen d'un scanner de corps entier (KS).
